# EUROPÄISCHE PATENTANMELDUNG

(11) **EP 0 930 182 A2**
(43) Veröffentlichungstag der Anmeldung: **21.07.1999**
(21) Anmeldenummer: 98123714.2
(22) Anmeldetag: 12.12.1998
(51) Int. Cl.: B60G 11/08

(54) **Fahrzeughinterachse mit mindestens zwei hintereinander angeordneten Querblattfedern**

(30) Priorität: 17.01.1998 DE 19801668
(71) Anmelder: DaimlerChrysler AG, 70567 Stuttgart (DE)
(72) Erfinder: Tattermusch, Peter, 73732 Esslingen (DE)

(57) **Zusammenfassung**

Die Erfindung betrifft eine Einzelradaufhängung für eine Fahrzeughinterachse, wobei die Querblattfedern an den freien Enden gelenkig einen Radträger pro Fahrzeugseite lagern und jede Querblattfeder zwischen ihren Enden über mindestens eine Anlenkstelle am Fahrzeugaufbau abgestützt ist. In der Hinterachse sind die Querblattfedern in den aufbauseitigen Anlenkstellen zumindest querverschiebbar gelagert. Ferner sind sie im Bereich zwischen den Radträgern über mindestens ein Koppelelement miteinander gelenkig verbunden, wobei die Gelenkstellen Schwenkachsen aufweisen, die zumindest annähernd parallel zur Fahrzeughochachse ausgerichtet sind. Mindestens ein Koppelelement ist dabei am Fahrzeugaufbau um zumindest eine annähernd vertikale Achse schwenkbar gelagert.
Mit der vorliegenden Erfindung wird eine Fahrzeugachse geschaffen, deren Querblattfedern trotz einer schwingungsdämpfenden Lagerung am Fahrzeugaufbau präzise geführt und bezüglich ihrer Biegelinie kaum beeinflußt werden.

## Beschreibung

Die Erfindung betrifft eine Einzelradaufhängung für eine Fahrzeughinterachse mit mindestens zwei hintereinander angeordneten Querblattfedern, wobei die Querblattfedern an den freien Enden gelenkig einen Radträger pro Fahrzeugseite lagern und jede Querblattfeder zwischen ihren Enden über mindestens eine Anlenkstelle am Fahrzeugaufbau abgestützt ist.

Eine derartige Einzelradaufhängung ist aus der DE 33 02 627 bekannt. Dort wird eine Kraftfahrzeughinterachse beschrieben, die zwei hintereinanderliegende Querblattfedern enthält. Die Querblattfedern bilden die unteren Lenker einer Kurbelschleifen- und einer Doppelquerlenkerachse. Die Querblattfedern sind bei einem Teil der Ausführungsbeispiele starr eingespannt, wodurch die Federkennung nachteilig beeinflußt wird. Ein anderer Teil der Ausführungsbeispiele zeigt eine starre Einspannung nur der hinteren Querblattfeder. Die vordere Querblattfeder ist pendelnd oder verschiebbar gelagert, wodurch deren Federrate niedriger ist als die der hinteren. In der Folge neigt die Hinterachse bei positiver und/oder negativer Fahrzeugbeschleunigung zum fahrkomfortstörenden Pendeln um die hintere Querblattfeder. Ferner sind die Radträger an den Enden der Querblattfedern gelenkig gelagert, wobei die vorderen Gelenkstellen ein großes Querspiel haben, so daß die Räder einzeln oder über die vordere Querblattfeder gekoppelt unter der Einwirkung einer Seitenkraft geringfügig lenken können. Da bei der Lenkbewegung die Räder um die Gelenkstellen der hinteren Querblattfeder geschwenkt werden ergibt sich dort ein deutlicher Spurversatz.

Der vorliegenden Erfindung liegt das Problem zugrunde, eine Fahrzeughinterachse mit Querblattfedern zu schaffen, deren Querblattfedern bei minimalem Gewicht, einfachem Aufbau und unkomplizierter Montage trotz einer schwingungsdämpfenden Lagerung am Fahrzeugaufbau präzise geführt und bezüglich ihrer Biegelinie kaum beeinflußt werden. Die Führung der Querblattfeder soll ein seitenkraftabhängiges Eigenlenkverhalten aufweisen.

Das Problem wird mit den Merkmalen des Hauptanspruchs gelöst. In der Hinterachse sind die Querblattfedern in den aufbauseitigen Anlenkstellen zumindest querverschiebbar gelagert. Ferner sind sie im Bereich zwischen den Radträgern über mindestens ein Koppelelement miteinander gelenkig verbunden, wobei die Gelenkstellen Schwenkachsen aufweisen, die zumindest annähernd parallel zur Fahrzeughochachse ausgerichtet sind. Mindestens ein Koppelelement ist dabei am Fahrzeugaufbau um zumindest eine annähernd vertikale Achse schwenkbar gelagert.

Die radfünrenden Querblattfedern nehmen Kräfte in alle Richtungen auf und ersetzen hierbei mindestens zwei untere Lenker und zwei Schraubenfedern. Der untere Lenkerverband kann durch einen radführenden Dämpfer oder durch obere Lenker zu einer vollständigen Radführung ausgebaut werden.

Die querliegenden Blattfedern sind am Fahrzeugaufbau in Anlenkstellen geführt. Dort werden sie vorwiegend in Fahrzeuglängsrichtung und nach oben abgestützt. Die Abstützung erfolgt so elastisch, daß die einzelne Querblattfeder während des Einfederns eine Biegelinie hat, die annähernd der Biegelinie einer freischwingenden Vergleichsfeder entspricht. Die Einspannung am Fahrzeugaufbau erhöht die Federrate der Querblattfedern sowohl beim gleichseitigen als auch wechselseitigen Einfedern nur unwesentlich.

Die zwischen den Querblattfedern angeordnete Koppelstange überträgt die auf die Räder wirkenden Seitenkräfte über eine Gelenkstelle auf den Fahrzeugaufbau. In der Gelenkstelle kann die Koppelstange uneingeschränkt der Hubbewegung der Querblattfedern folgen.

Die Koppelstange kann zwischen den Radträgern beispielsweise in einem Schwingungs- oder Verformungsknoten der beispielsweise aus einem Verbundwerkstoff gefertigten Blattfedern befestigt werden, wodurch zum einem die Blattfederkennung unbeeinflußt bleibt und zum anderen nur Schwingungen mit geringer Amplitude an die Anlenkstellen weitergegeben werden.

Neben der asymmetrischen, einseitigen Anordnung können auch zwei oder mehr Koppelstangen verwendet werden, um die Querblattfedern in ihrer Verschiebung unter der Einwirkung von Längs- und Querkräften zu synchronisieren.

Durch die Lage des Anlenkpunktes der Koppelstangen am Fahrzeugaufbau in bezug auf den Abstand zur Radmittenquerebene kann ein bestimmtes Eigenlenkverhalten der Hinterachse vorgegeben werden. Die Bandbreite reicht von einem unter- bis hin zu einem übersteuernden Einfluß.

Weitere Einzelheiten der Erfindung ergeben sich aus den nicht zitierten Unteransprüchen und der nachfolgenden Beschreibung mehrerer schematisch dargestellter Ausführungsformen:
- Figur 1:: Einzelradaufhängung in der Frontansicht mit unterschiedlichen Koppelelementen;
- Figur 2:: Einzelradaufhängung in der Draufsicht;
- Figur 3:: Einzelradaufhängung in der Seitenansicht;
- Figur 4:: Einzelradaufhängung in der Draufsicht mit über Koppelstangen abgestützten Koppelelementen.

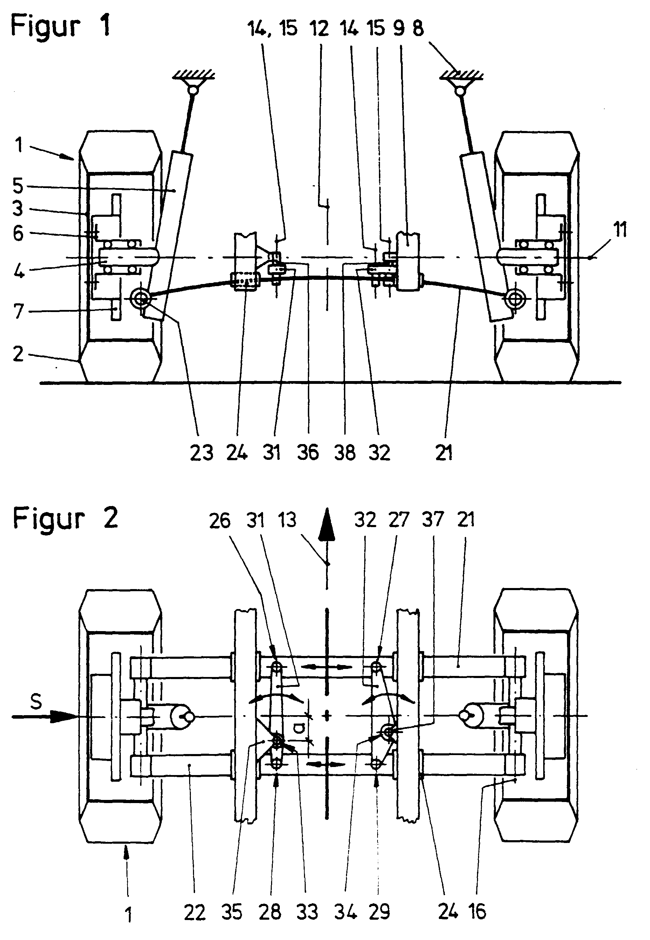

Die Figuren 1 bis 3 zeigen eine Einzelradaufhängung für eine PKW-Hinterachse. Die Hinterachse hat zwischen den Rädern (1) zwei parallel hintereinander liegende Querblattfedern (21, 22). Jede Querblattfeder (21, 22) ist am Fahrzeugaufbau (8) an den Längsträgern (9) in zwei Federlagern (24) gelagert. Die Federlager (24) sind beispielsweise elastische Gummilager, die in Fahrzeuglängs- und Vertikalrichtung eine hohe Steifigkeit haben, während sie in Fahrzeugquerrichtung bei niedriger Steifigkeit unter Seitenkraft einen Hub von mehreren Millimetern zulassen. Das einzelne Federlager (24) hat annähernd die Funktion eines Schubgelenks mit elastischer Rückstellung.

Die unterhalb der horizontalen Radmittenebene verlegten Querblattfedern (21, 22) umschließen im Felgenbereich der Räder (1) paarweise je einen Radgelenkbolzen (23). Die Radgelenkbolzen (23) und die sie umfassenden Blattfederenden - beispielsweise in Form eines geschlossenen Federauges - bilden Schwenkgelenklager mit annähernd horizontalen Achsen. Diese Schwenkgelenklager werden in Fahrzeuglängsrichtung gegebenenfalls elastisch ausgelegt, um den Längsfederkomfort der Hinterachse zu verbessern. Zumindest sind die Schwenkgelenklager insoweit elastisch ausgebildet, daß die Radgelenkbolzen (23) in den Federaugen zum einen in Fahrzeugquerrichtung um eine annähernd vertikale Achse und zum anderen um eine achsparallele, horizontale Achse geringfügig, z.B. jeweils um ± 10°, schwenkbar sind.

Pro Radseite ist an dem Radgelenkbolzen (23) ein Dämpferbein (5) starr angeordnet, das sich über seine Kolbenstange am Fahrzeugaufbau (8) abstützt. Oberhalb des Radgelenkbolzens (23) ist am Dämpferbein (5) ein Radträger (4) angeformt oder befestigt. Auf dem Radträger (4) sitzt wälzgelagert eine Radnabe (6), eine Bremsscheibe (7) und eine bereifte Felge (3).

Bei den dargestellten Einzelradaufhängungen bilden die Querblattfedern (21, 22) die unteren Lenker einer Kurbelschleifenachse. Alternativ läßt sich das Dämpferbein durcn nahezu alle gängigen Lenkeranordnungen ersetzen.

Die Querblattfedern (21, 22) sind beispielsweise im Bereich zwischen den Längsträgern (9) bzw. ihren Federlagern (24) über Koppelelemente (31, 32) mechanisch miteinander verbunden. Diese Koppelelemente (31, 32) sind in den Ausführungsbeispielen Koppelstangen, die zum einen an ihren freien Enden gelenkig an den Querblattfedern (21, 22) befestigt sind und zum anderen sich gelenkig am Fahrzeugaufbau (8, 9) abstützen.

In den Figuren 1 und 2 haben die drei Gelenkstellen pro Koppelstange (31, 32) alle eine annähernd vertikale Schwenkachse (14), wobei die einzelnen Schwenkgelenke (26-29; 33, 34) beispielsweise als Kugelgelenke ausgebildet sind. Alle Schwenkgelenke (26-29; 33, 34) sind zumindest in der horizontalen Fahrzeugquer- und längsrichtung formsteif ausgelegt. Wenigstens die Schwenkgelenke (33, 34) nach den Figuren 1 und 2 lassen den Höhenversatz zu, der beim Ein- und Ausfedern der sich verformenden Querblattfedern (21, 22) ergibt.

In den Gelenkstellen (26-29) können die Koppelstangen (31, 32) gabelförmig geformt sein und die Querblattfedern (21, 22) oben und unten umgreifen.

In den Figuren 1 und 2 sind an einer Hinterachse zwei nur beispielhaft verschiedene Koppelstangen (31, 32) und entsprechende Lagerungen dargestellt. In der Regel werden pro Hinterachse gleiche Koppelstangen (31, 32) mit spiegelsymmetrischen Lagerungen verwendet. Eine asymmetrische Abstützung mit nur einem Koppelelement, z.B. der Koppelstange (31), ist auch möglich.

Bei der linken Koppelstange (31) liegen die Schwenkgelenke (26, 28, 33) hintereinander auf der Wirkungslinie der Koppelstange (31). Die Abstützung dieser Koppelstange (31) am linken Längsträger (9) erfolgt über einen Lagerbock (35). An letzerem ist ein das Schwenkgelenk (33) tragender Lagerzapfen (36) befestigt.

Die Gelenkstelle (33) ist gegenüber der Achsenmittellinie (11) um den Abstand "a" versetzt angeordnet. Greift nun, wie in Figur 2 dargestellt, bei einer Kurvenfahrt am kurvenäußeren, linken Rad (1) eine Seitenkraft "S" an, wird diese hauptsächlich über die Querblattfedern (21, 22) und die Koppelstange (31) um den Hebel "a" versetzt in den Fahrzeugaufbau (8,9) an der Gelenkstelle (33) eingeleitet. Aufgrund des Versatzes "a" verschiebt sich die vordere Querblattfeder (21) nach rechts, während die hintere Querblattfeder (22) vermindert um das Hebelverhältnis der Koppelstange (31) nach links auswandert. Hierbei schwenkt die Koppelstange (31) zwangsläufig geringfügig im Uhrzeigersinn um die Achse der Gelenkstelle (33). Die Räder (1) verschwenken - nach rechts lenkend - annähernd synchron zur Koppelstange (31). Die Hinterachse wirkt in diesem Fall untersteuernd.

Die Gelenkstelle (33) kann auch außerhalb dem Bereich zwischen den Querblattfedern (21, 22) liegen, z.B. hinter der Querblattfeder (22). Ferner kann die Schwenkbewegung der Koppelstange (31, 32) hydraulisch bedämpft werden. Hierzu kann die einzelne Koppelstange beispielsweise mittels eines Dämpfers zusätzlich am Fahrzeugaufbau (8) und/oder den Längsträgern (9) abgestützt werden.

Gegebenenfalls werden die Querbewegung der Querblattfedern (21, 22) mit Hilfe von Anschlägen begrenzt.

Da sich bei einer realen Kurvenfahrt die Radaufstandsfläche des kurvenäußeren Rades unter der Einwirkung der Seitenkraft nierenförmig verformt und somit mit zunehmender Seitenkraft deren Angriffspunkt von der Radmitte nach hinten wegwandert, kann durch den Versatz "a" ein Fahrverhalten erzwungen werden, das beispielsweise bei niedriger Seitenkraft untersteuernd und bei großer Seitenkraft neutral oder übersteuernd wirkt.

Da zudem die Gelenkstelle (33) in der Regel nur um wenige Millimeter oder Zentimeter vor oder hinter der Achsenmittellinie bzw. der vertikalen Radmittenquerebene liegt, verlagert sich der Schwerpunkt der Radaufstandsfläche nur geringfügig in Querrichtung.

Die in den Figuren 1 und 2 dargestellte rechte Koppelstange (32) ist über einen Lagerzapfen (38) in einem am Längsträger (9) angeordneten Doppellagerbock (37) angelenkt. Die Schwenkachse (15) ist gegenüber einer die Schwenkgelenke (27) und (29) verbindenden Geraden seitlich versetzt angeordnet. Bei einem Verschwenken der Koppelstange (32) unter der Einwirkung einer Seitenkraft verhärten sich die Federlager (24) in Fahrzeuglängsrichtung. Durch eine entsprechende Auslegung der Federlager (24) kann dadurch die Federrate der Querblattfedern (21, 22) bei Kurvenfahrt zusätzlich vergrößert werden.

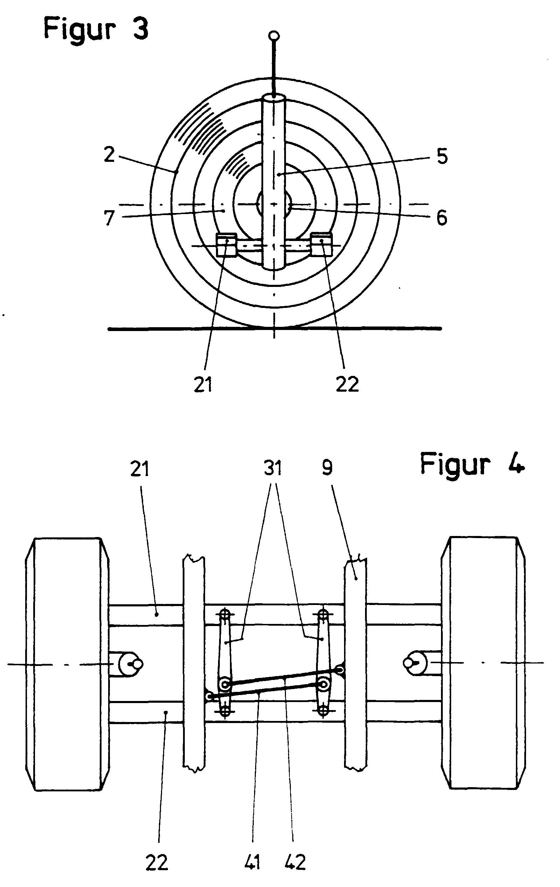

Figur 4 zeigt eine Hinterachse mit zwei über Anlenkstangen (41, 42) am Fahrzeugaufbau (8, 9) abgestützten Koppelstangen (31). Die Anlenkstangen (41, 42) können mit den Koppelstangen über Gelenke verbunden werden, die in der Vertikalrichtung keinen linearen Freiheitsgrad benötigen. Sie können auch ohne definierte Gelenkstellen an der Koppelstange (31) und/oder dem Fahrzeugaufbau (8, 9) befestigt sein, so daß sie als Rückstellfeder für die seitlich ausgelenkten Querblattfedern (21, 22) wirken.

### Bezugszeichenliste

- 1: Rad
- 2: Reifen
- 3: Felge
- 4: Radträger
- 5: Dämpferbein
- 6: Radnabe
- 7: Bremsscheibe
- 8: Fahrzeugaufbau
- 9: Längsträger
- 11: Achsenmittellinie
- 12: Fahrzeughochachse
- 13: Fahrtrichtung
- 14: Schwenkachsen der Schwenkgelenke (26-29)
- 15: Schwenkachsen der Schwenkgelenke (33, 34)
- 16: Schwenkachsen der Radgelenkbolzen (23)
- 21: Querblattfeder, vorn
- 22: Querblattfeder, hinten
- 23: Radgelenkbolzen
- 24: Anlenkstellen, Federlager an (9)
- 26, 27: Schwenkgelenke an (21)
- 28, 29: Schwenkgelenke an (22)
- 31, 32: Koppelelement, Koppelstange
- 33, 34: Schwenkgelenke an (9)
- 35: Lagerbock für (31)
- 36: Lagerzapfen
- 37: Doppellagerbock für (32)
- 38: Lagerzapfen
- 41, 42: Anlenkstangen

## Patentansprüche

1. Einzelradaufhängung für eine Fahrzeughinterachse mit mindestens zwei hintereinander angeordneten Querblattfedern, wobei die Querblattfedern an den freien Enden gelenkig einen Radträger pro Fahrzeugseite lagern und jede Querblattfeder zwischen ihren Enden über mindestens eine Anlenkstelle am Fahrzeugaufbau abgestützt ist, dadurch gekennzeichnet,
- daß die Querblattfedern (21, 22) in den aufbauseitigen Anlenkstellen (24) zumindest querverschiebbar gelagert sind,
- daß die Querblattfedern (21, 22) im Bereich zwischen den Radträgern (4) über mindestens ein Koppelelement (31, 32) miteinander gelenkig verbunden sind, wobei die Gelenkstellen (26-29) Schwenkachsen (14) aufweisen, die zumindest annähernd parallel zur Fahrzeughochachse (12) ausgerichtet sind und
- daß mindestens ein Koppelelement (31, 32) am Fahrzeugaufbau (8, 9) in einer Gelenkstelle (33, 34) um zumindest eine annähernd vertikale Achse (15) schwenkbar gelagert ist.

2. Einzelradaufhängung nach Anspruch 1, dadurch gekennzeichnet, daß die Gelenkstellen (33, 34) gegenüber der vertikalen Radmittenquerebene versetzt angeordnet sind.

3. Einzelradaufhängung nach Anspruch 1, dadurch gekennzeichnet, daß die Koppelstangen (31, 32) einer Hinterachse gleich oder spiegelsymmetrisch gestaltet sind.

4. Einzelradaufhängung nach Anspruch 1, dadurch gekennzeichnet, daß die Koppelstangen (31, 32) mit Hilfe von Anlenkstangen (41, 42) am Fahrzeugaufbau (8,9) angelenkt sind.

5. Einzelradaufhängung nach Anspruch 4, dadurch gekennzeichnet, daß die Anlenkstangen (41, 42) jeweils mindestens eine Koppelstange (31, 32) kreuzen.

6. Einzelradaufhängung nach Anspruch 1, dadurch gekennzeichnet, daß mindestens eine Koppelstange (31, 32) zum Bedämpfen ihrer Schwenkbewegung am Fahrzeugaufbau (8) oder einem der Längsträger (9) mittels eines hydraulischen oder pneumatischen Dämpferelements angelenkt ist.
